(19) Europäisches Patentamt
European Patent Office
Office européen des brevets

(11) **EP 4 604 049 A1**

(12) **EUROPÄISCHE PATENTANMELDUNG**

(43) Veröffentlichungstag:
**20.08.2025 Patentblatt 2025/34**

(21) Anmeldenummer: **25155043.0**

(22) Anmeldetag: **30.01.2025**

(51) Internationale Patentklassifikation (IPC):
**G06T 3/4038** (2024.01)

(52) Gemeinsame Patentklassifikation (CPC):
**G06T 3/4038; A47L 11/4011;** A47L 2201/04

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(30) Priorität: **14.02.2024 DE 102024201359**

(71) Anmelder: **BSH Hausgeräte GmbH**
**81739 München (DE)**

(72) Erfinder:
• **Schnitzer, Frank**
**97616 Bad Neustadt (DE)**
• **Daniel, Kristina**
**97616 Bad Neustadt (DE)**
• **Schmitt, Kai**
**97633 Saal (DE)**

(54) **VERFAHREN ZUM ERSTELLEN EINER UMGEBUNGSKARTE**

(57) Es wird ein Verfahren zum Erstellen einer Umgebungskarte (11) eines Umgebungsbereichs für den Betrieb eines mobilen, selbstfahrenden Geräts (10), insbesondere Bodenreinigungsgeräts wie ein Saug- und/oder Kehr- und/oder Wischroboter, mittels einer Kamera (2) des Geräts und einer Verarbeitungseinrichtung des Geräts angegeben, das folgende Verfahrensschritte umfasst: Erfassen von (n-1) Bildern eines Bodenbereichs einer Rasterzelle des Umgebungsbereichs mit der Kamera (2); Transformieren der (n-1) Bilder mit bekannten Parametern der Kamera (2), ihrer Position und Ausrichtung am Gerät (10) derart, dass vogelperspektivische erste Bilddarstellungen des Bodenbereichs der Rasterzelle erzeugt werden; Zusammenfügen der ersten Bilddarstellungen unter Durchführung einer gewichteten Mittelwertbildung und Einfügen einer ersten gemittelten Bilddarstellung des Bodenbereichs in die Umgebungskarte (11) unter Einbeziehung der Geräteposition und -orientierung in Bezug auf die Umgebungskarte (11); Erfassen von mindestens einem n-ten Bild des Bodenbereichs der Rasterzelle und Transformieren des n-ten Bilds in eine zweite Bilddarstellung; Zusammenfügen der ersten und zweiten Bilddarstellungen der Rasterzelle unter Durchführung einer gewichteten Mittelwertbildung aller Bilddarstellungen; und Überschreiben der ersten gemittelten Bilddarstellung in der Umgebungskarte (11) mit einer zweiten gemittelten Bilddarstellung.

Fig. 2

EP 4 604 049 A1

**Beschreibung**

Die Erfindung betrifft ein Verfahren zum Erstellen einer Umgebungskarte eines Umgebungsbereichs für den Betrieb eines mobilen, selbstfahrenden Geräts, insbesondere Bodenreinigungsgeräts wie ein Saug- und/oder Kehr- und/oder Wischroboter, ein mobiles, selbstfahrendes Gerät, ein Computerprogrammprodukt sowie einen computerlesbaren Datenträger.

Mobile, selbstfahrende Geräte, wie beispielsweise Saugroboter, haben die Aufgabe, autonom möglichst eine gesamte Bodenfläche zu reinigen. Sie sollen insbesondere ihren Nutzern aufwendige, sich wiederholende Aufgaben der Bodenreinigung abnehmen. Die Roboter führen regelmäßig Reinigungsaufträge aus oder werden von dem Nutzer gezielt zum Reinigen zu einer definierten Bodenfläche geschickt. Hierfür wird der Reinigungsroboter über eine App an beispielsweise einem Smartphone mit einer dargestellten Umgebungskarte bedient. In dieser Umgebungskarte ist in der Regel der Grundriss der Wohnfläche mit den darin enthaltenen Wänden, Möbeln und Gegenständen als Konturen angezeigt.

Die Darstellung in der Umgebungskarte bezieht sich meist auf begrenzende Wände und Konturen von Gegenständen, sodass eine Art Grundriss der Wohnfläche angezeigt wird. Abgesehen von ihren Konturen und ihrer relativen Lage zueinander lassen sich verschiedene Räume oft nicht voneinander unterscheiden.

Um dem Nutzer eine verbesserte Wiedererkennbarkeit realer Orte in der Umgebungskarte der App zu ermöglichen und somit eine erleichterte Bedienung des Roboters bereitzustellen, können bebilderte Karten Verwendung finden. Hierbei werden Kamerabilder des Roboters aufgenommen und schrittweise dazu verwendet, eine Bodendarstellung in der App zu realisieren. Die Umgebungskarte wird dadurch in der App unter Einbindung der Bilddarstellungen des Roboters realistisch dargestellt.

Die Umwandlung der Kamerabilder des Roboters in die Kartenbilder für die App basiert herkömmlicherweise auf einer Transformation, die davon ausgeht, dass der vom Roboter mittels Kamera erfasste Boden völlig eben ist und der Roboter und somit die Kamera stets eine unveränderte Ausrichtung, beispielsweise Kipprichtung, haben. Bodenunebenheiten und Nickbewegungen des Roboters während der Fahrt können zu Verzerrungen in den Kartenbildern führen, die je nach Situation und Fahrtrichtung unterschiedlich sein können.

Weitere Einflüsse auf die Bilddarstellungen können wechselnde Beleuchtungszustände, wie Tageslicht oder künstliches Licht, Reflektionen oder Blendungen haben. Derartige Situationen können ebenfalls negative Einflüsse auf die bebilderte Karte haben, beispielsweise, wenn Bodenflächen in Teilen mit unterschiedlichen Helligkeiten dargestellt werden.

Zudem besteht die Gefahr einer Verschlechterung der bebilderten Karte oder von Schwankungen der Bildqualität falls bereits vorhandener Bilddarstellungen der Umgebungskarten einfach mit neu aufgenommenen Bilddarstellungen ersetzt werden, da nicht gewährleistet werden kann, dass die neu aufgenommenen Bilddarstellungen eine bessere Bildqualität aufweisen als die bereits vorhandenen Bilddarstellungen.

Aus der Druckschrift DE 10 2018 132 428 A1 ist eine photomosaische Bodenkartierung durch den Roboter bekannt, bei dem Bilder der Roboterkamera durch Transformation in eine Vogelperspektive umgewandelt werden. Das Sichtfeld der Kamera wird als Bild erfasst, auf einen Teil oder ein Segment zugeschnitten, in eine planare Ansicht umgewandelt und mit anderen Bildern kombiniert. Es entsteht ohne Einbindung des Nutzers eine zusammengesetzte, bebilderte Karte. Um eine hohe Bildqualität zu gewährleisten, wird die Qualität jedes aufgenommenen Bildes bestimmt und bei mehrfach erfassten gleichen Segmenten, für die mehrere Versionen mit unterschiedlichen Qualitäten vorliegen, jeweils die Version niedriger Qualität durch eine Version höherer Qualität ersetzt. Durch das reine Ersetzen einer Version eines Segments durch eine andere Version können jedoch nachteilig sichtbare Schwankungen des Bildinhaltes (zum Beispiel der Helligkeit) auftreten, die die Gesamtqualität der Umgebungskarte mindern können.

Aufgabe der Erfindung ist es, ein verbessertes Verfahren zum Erstellen einer Umgebungskarte bereitzustellen, bei dem sich eine stabile Kontinuität der Kartenbilddarstellungen über die Zeit ermöglicht, und bei dem die Qualität der bebilderten Umgebungskarte bei deren Erstellung und bei deren weiterführenden (ständigen) Aktualisierung erhöht werden kann.

Diese Aufgabe wird durch ein Verfahren zum Erstellen einer Umgebungskarte eines Umgebungsbereichs für den Betrieb eines mobilen, selbstfahrenden Geräts mit den Merkmalen des Anspruchs 1 gelöst. Vorteilhafte Ausgestaltungen und Weiterbildungen sind Gegenstand der Unteransprüche.

Erfindungsgemäß umfasst ein Verfahren zum Erstellen einer Umgebungskarte eines Umgebungsbereichs für den Betrieb eines mobilen, selbstfahrenden Geräts, insbesondere Bodenreinigungsgeräts wie ein Saug- und/oder Kehr- und/oder Wischroboter, mittels einer Kamera des Geräts und einer Verarbeitungseinrichtung des Geräts folgende Verfahrensschritte:

  a) Erfassen von (n-1) Bildern eines Bodenbereichs einer Rasterzelle des Umgebungsbereichs mit der Kamera;
  b) Transformieren der (n-1) Bilder mit bekannten Parametern der Kamera, ihrer Position und Ausrichtung am Gerät derart, dass vogelperspektivische erste Bilddarstellungen des Bodenbereichs der Rasterzelle erzeugt werden;
  c) Zusammenfügen der ersten Bilddarstellungen unter Durchführung einer gewichteten Mittelwertbildung und Einfügen einer ersten gemittelten Bilddarstellung des Bodenbereichs in die Umgebungskarte unter Einbeziehung der Geräteposition und -orientierung in Bezug auf die Umgebungskarte;

d) Erfassen von mindestens einem n-ten Bild des Bodenbereichs der Rasterzelle und Transformieren des n-ten Bilds in eine zweite Bilddarstellung;

e) Zusammenfügen der ersten und zweiten Bilddarstellungen der Rasterzelle unter Durchführung einer gewichteten Mittelwertbildung aller Bilddarstellungen; und

f) Überschreiben der ersten gemittelten Bilddarstellung in der Umgebungskarte mit einer zweiten gemittelten Bilddarstellung.

Durch das erfindungsgemäße Verfahren kann mit Vorteil die Qualität der bebilderten Umgebungskarte bei deren Erstellung und bei deren weiterführenden (ständigen) Aktualisierung erhöht werden. Dadurch ergeben sich sichtbar bessere Darstellungen der Bodenfläche mit geringeren Verzerrungen, weniger beleuchtungsabhängigen Helligkeitswechseln und somit mit einer insgesamt stimmigeren zusammenhängenden Bildfläche.

Das Gerät weist eine Vielzahl von Sensoren auf, mit denen es seine Umwelt wahrnimmt, unter anderem einen LIDAR-Sensor, der zur Erstellung der Umgebungskarte mit den Konturen von Wänden und Hindernissen genutzt wird. Darüber hinaus verfügt das Gerät über mindestens eine Kamera, die Objekte vor dem Gerät erfassen kann und beispielsweise für eine Objekterkennung und -klassifizierung verwendet wird. Das Sichtfeld der Kamera (field of view - FoV) erfasst dabei auch Abschnitte des Bodens. Diese Teile des Bildes können genutzt werden, um eine photomosaische Bodenkartierung durchzuführen. Dabei werden die Bildinhalte mit bekannten Parametern der Kamera und ihrer Position und Ausrichtung am Gerät so transformiert, dass sie einer vogelperspektivischen Darstellung der aufgenommenen Bodenfläche entsprechen. Unter Einbeziehung der Geräteposition und -orientierung in Bezug auf die Umgebungskarte zum Zeitpunkt der Bildaufnahme kann die entsprechende Teilfläche in der Kartendarstellung mit den Bilddarstellungen gefüllt werden.

Das Gerät erfasst mit der Kamera eine Vielzahl von Bildern aus wechselnden Richtungen, mit unterschiedlichen Beleuchtungsbedingungen und teilweise mit unterschiedlichen Nickwinkeln, beispielsweise durch Bodenunebenheiten, zu überwindende Hindernisse, Türschwellen, und ähnliches. Um diese Bilder zu einer resultierenden Bodenfläche zusammenzusetzen, erfolgt eine gewichtete Mittelwertbildung bisheriger und neuer Bilddarstellungen für die Bodenfläche. Statt die Bilddarstellungen für einen aktuell erfassten Bereich des Bodens komplett mit neuen Bilddarstellungen zu überschreiben, erfolgt eine Zusammenführung bisheriger und neuer Darstellungen. Je öfter ein Bodenabschnitt mit der Kamera erfasst wird, desto stabiler bleiben die für diesen Bereich hinterlegten Bilddarstellungen. Da das Gerät über die Zeit den Bodenbereich mehrmals erfasst, beeinträchtigen vereinzelte fehlerhafte Aufnahmen durch Nickbewegungen oder unvorteilhafte Lichtblendungen die Gesamtdarstellung nicht. Vereinzelte "Problembilder" haben so kaum Auswirkungen oder werden zeitnah unterdrückt. Außerdem erfolgen eine automatische Mittelung von Beleuchtungsbedingungen, wie beispielsweise Tageslicht oder künstliches Licht durch Lampen, und eine Mittelung von unterschiedlichen Perspektiven.

Unter einem mobilen, selbstfahrenden Gerät ist insbesondere ein Bodenreinigungsgerät zu verstehen, welches insbesondere im Haushaltsbereich Bodenflächen autonom bearbeitet. Hierunter zählen unter anderem Saug-, Wisch- und/oder Kehrroboter wie beispielsweise Staubsaugerroboter. Diese Geräte arbeiten im Betrieb (Reinigungsbetrieb) bevorzugt ohne oder mit möglichst wenig Nutzereingriff. Beispielsweise fährt das Gerät selbsttätig in einen vorgegebenen Raum, um entsprechend einer vorgegebenen und einprogrammierten Verfahrensstrategie den Boden zu reinigen.

Unter der zu bearbeitenden Bodenfläche ist jegliche zu reinigende Raumfläche zu verstehen. Hierunter fallen unter anderem auch Teilbereiche einzelner Räume, einzelne Flächen einer Wohnung, einzelne Räume einer Wohnung und/oder die gesamte Bodenfläche der vollständigen Wohnung beziehungsweise des Wohnraums.

Unter einer Rasterzelle ist insbesondere ein Teilbereich des Umgebungsbereichs zu verstehen. Insbesondere setzt sich der Umgebungsbereich aus einer Vielzahl von Rasterzellen zusammen, die insbesondere in ihrer Größe, Form, Ausrichtung, und ähnliches, identisch oder zumindest ähnlich sind.

Unter einer Umgebungskarte ist insbesondere jegliche Karte zu verstehen, die geeignet ist, die Umgebung des Bodenbearbeitungsbereichs mit all seinen Wänden, Hindernissen und Gegenständen darzustellen. Beispielsweise zeigt die Umgebungskarte den Bodenbearbeitungsbereich mit den darin enthaltenen Möbeln und Wänden skizzenartig an.

Unter Hindernisse sind jegliche Objekte und/oder Gegenstände zu verstehen, die in einem Bodenbearbeitungsbereich angeordnet sind, beispielsweise dort liegen oder stehen, und die Bearbeitung durch das mobile, selbstfahrende Gerät beeinflussen, insbesondere behindern und/oder stören, wie beispielsweise Möbel, Wände, Vorhänge, Teppiche, und ähnliches.

Die Umgebungskarte mit den Hindernissen wird vorzugsweise in einer App an einer vorzugsweise tragbaren Eingabevorrichtung dargestellt. Diese dient insbesondere der Visualisierung zu einer möglichen Interaktion für den Nutzer.

Unter einer Eingabevorrichtung ist vorliegend insbesondere jegliches Gerät zu verstehen, das für einen Benutzer tragbar ist, das außerhalb des mobilen, selbstfahrenden Geräts angeordnet, insbesondere extern und/oder differenziert vom mobilen, selbstfahrenden Gerät ist, und zu einer Anzeige, Bereitstellung, Übermittlung und/oder Übertragung von Daten mittels der Schnittstelle geeignet ist, wie beispielsweise ein Handy, ein Smartphone, ein Tablet und/oder ein Computer beziehungsweise Laptop.

Auf der Eingabevorrichtung ist die App, insbesondere eine Steuerungs-App für das Gerät und/oder eine Reinigungs-App, installiert, die zur Kommunikation des mobilen, selbstfahrenden Geräts mit der Eingabevorrichtung dient und insbesondere eine Visualisierung des Bodenbearbeitungsbereichs, also des zu reinigenden Wohnraums oder der zu reinigenden Wohnung beziehungsweise Wohnbereichs ermöglicht. Die App zeigt dem Nutzer dabei vorzugsweise den zu reinigenden Bereich als Umgebungskarte sowie jegliche Hindernisse an.

Unter einer Kamera ist insbesondere jegliches Bildaufnahmegerät zu verstehen, das geeignet ist, Bilder seiner Umgebung aufzunehmen, vorzugsweise mit hoher Bildqualität. Die Kamera ist dabei Teil des Geräts und insbesondere in diesem integriert.

Die Kamera erfasst (n-1) Bilder eines Bodenbereichs einer Rasterzelle des Umgebungsbereichs, wobei n eine ganze Zahl größer 1 ist. Weiter zeitversetzt erfasst die Kamera das n-te Bild und optional weitere Bilder des Bodenbereichs derselben Rasterzelle.

Unter einer Verarbeitungseinrichtung ist insbesondere jegliche Einrichtung zu verstehen, die geeignet ist, Bilddarstellungen zu bearbeiten, verarbeiten, zusammenzusetzen, zu speichern, zu transformieren und/oder umzuschreiben. Die Verarbeitungseinrichtung ist Teil des Geräts und insbesondere in diesem integriert. Das Transformieren der (n-1) Bilder derart, dass vogelperspektivische erste Bilddarstellungen des Bodenbereichs der Rasterzelle erzeugt werden, findet mittels der Verarbeitungseinrichtung statt. Weiter zeitversetzt transformiert die Verarbeitungseinrichtung das n-te Bild und optional weitere erfasste Bilder in die zweite Bilddarstellung. Zudem fügt die Verarbeitungseinrichtung anschließend die ersten und zweiten Bilddarstellungen der Rasterzelle zusammen und aktualisiert so die gemittelte Bilddarstellung der Umgebungskarte durch Überschreiben. Jegliche Bilddarstellungen werden zudem bevorzugt in der Verarbeitungseinrichtung gespeichert, insbesondere in einem Speicher der Verarbeitungseinrichtung.

Bei einer vorteilhaften Ausführungsform ist der Umgebungsbereich in eine Vielzahl von Rasterzellen eingeteilt, wobei in jeder Rasterzelle die Verfahrensschritte a) bis f) durchgeführt werden. Durch das bevorzugt vollständige Einteilen des Umgebungsbereichs in Rasterzellen kann mit Vorteil eine realistische Abbildung des gesamten Bodenbelags des Umgebungsbereichs gewährleistet werden. Die Langzeitstabilität der Bilddarstellungen im gesamten Umgebungsbereich kann so gewährleistet werden. Der gesamte Umgebungsbereich kann mit hoher Genauigkeit und Detailtreue dargestellt werden.

Bei einer weiteren vorteilhaften Ausführungsform werden das Erfassen der (n-1) Bilder bei einer Explorationsfahrt und/oder Reinigungsfahrt und das Erfassen des n-ten Bildes und optional weiterer Bilder bei einer sich anschließenden Reinigungsfahrt durchgeführt. Das Gerät wird nach seiner Inbetriebnahme beim Nutzer auf eine Explorationsfahrt geschickt, bei der das Gerät die Umgebung erkundet, seine Umgebungskarte erstellt und zeitgleich die Bodenfläche als bebilderte Karte in die Umgebungskarte integriert. Bereits während der Erstellung der bebilderten Karte und eventuell auch später bei sich anschließenden Reinigungsfahrten nimmt die Kamera des Geräts die (n-1) Bilder der Bodenflächen auf. Das n-te Bild und eventuell nachfolgende Bilder werden bei einer nachfolgenden Reinigungsfahrt aufgenommen und dienen zur Aktualisierung der Umgebungskarte unter Berücksichtigung der gewichteten Mittelwertbildung aller bisheriger Bilddarstellungen.

Bei einer weiteren vorteilhaften Ausführungsform erfolgt das Erfassen der (n-1) Bilder aus wechselnden Richtungen, mit unterschiedlichen Beleuchtungsbedingungen und/oder mit unterschiedlichen Nickwinkeln. Diese aufgenommenen (n-1) Bilder werden zusammengeführt, um fehlerhafte Aufnahmen in ihrer Gewichtung zu reduzieren, sodass diese die Gesamtdarstellung der Bodenfläche kaum beeinträchtigen. Vorzugsweise erfolgt auch das Erfassen des n-ten Bildes und weiterer nachfolgender Bilder aus wechselnden Richtungen, mit unterschiedlichen Beleuchtungsbedingungen und/oder mit unterschiedlichen Nickwinkeln.

Bei einer weiteren vorteilhaften Ausführungsform ergibt sich die zweite gemittelte Bilddarstellung aus der ersten gemittelten Bilddarstellung multipliziert mit der Anzahl der erfassten ersten Bilddarstellungen, das Ergebnis addiert mit der zweiten Bilddarstellung und dieses Ergebnis geteilt durch n, wobei n eine ganze Zahl größer als 1 ist. Folgende Formel ergibt sich demnach:

$$B_{nij,ij} = [\ (B_{(n-1)ij,ij} * (n-1)_{ij}) + D_{nij,ij}\ ] : n_{ij}$$

mit $D_n$ als neue Bilddarstellungen der Kamera, $B_n$ als im Speicher hinterlegte gemittelte Bilddarstellungen, ij als Index einer Rasterzelle und $n_{ij}$ als Anzahl der Erfassungen dieser Rasterzelle. So ergibt sich eine Zusammenführung der Bilddarstellungen für eine Rasterzelle. Bei Abschnitten der Bodenfläche, die besonders oft mit der Kamera erfasst werden, haben dadurch vereinzelte Problembilder kaum noch Auswirkungen auf das Gesamtergebnis oder werden zeitnah unterdrückt. Eine automatische Mittelung von Beleuchtungsbedingungen und von unterschiedlichen Perspektiven kann mit Vorteil erzeugt werden. In den Bilddarstellungen sind dafür nicht nur die bisherigen Bilddarstellungen (B) jeder Rasterzelle abgespeichert, sondern auch die Anzahl der bisherigen (n-1) Erfassungen einer jeden Rasterzelle.

Bei einer weiteren vorteilhaften Ausführungsform umfassen die ersten und zweiten Bilddarstellungen die Farbkanäle und/oder Farbeinstellungen, auf die die gewichtete Mittelwertbildung angewandt wird. Für eine farbliche Darstellung der Bilddarstellungen wird die Formel beispielsweise einzeln auf die Farbkanäle (RGB) und/oder die Farbeinstellungen (HSV) angewendet.

Bei einer weiteren vorteilhaften Ausführungsform ist das Erfassen der (n-1) Bilder auf einen Maximalwert beschränkt, sodass auch nach vielen Erfassungen neue Bilddarstellungen einen gewissen Einfluss behalten. Dadurch können unter anderem Veränderungen in der Wohnung langsam in die Bilddarstellungen der Umgebungskarte übernommen werden. Insbesondere wird eine Wichtung der ersten gemittelten Bilddarstellung gedeckelt. Das bedeutet, wenn n-1+x Bilder aufgenommen werden, zählen diese zwar in die erste gemittelte Bilddarstellung, aber die Wichtung wird nicht auf n-1+x gesetzt, sondern auf n-1.

Insbesondere die Wichtung mittels Anzahl bisheriger Erfassungen kann dazu führen, dass Veränderungen in der Wohnung, wie beispielsweise ein Umstellen von Möbeln, kaum oder nur sehr langsam in die Bilddarstellungen übernommen werden. Durch ein Durchführen eines Resets kann dem Nutzer die Möglichkeit gegeben werden, den Wichtungsfaktor n-1 (Anzahl der erfassten ersten Bilddarstellungen) auf 1 oder auf 0 zu setzen, sodass neue Bilddarstellungen stärker Einfluss nehmen, beziehungsweise alte Bilddarstellungen einmalig überschrieben werden dürfen, ohne dabei zwingend die gesamte Umgebungskarte zu löschen, womit unveränderte Bereiche weiterhin in der Umgebungskarte belassen werden können. Ein solcher Reset muss nicht zwingend auf die gesamte Bodenfläche angewendet werden, sondern kann per Funktion in der App auf nur ausgewählte Bereiche der Umgebungskarte angewendet werden. Alternativ kann der Nutzer eine erneute Explorationsfahrt vom Gerät durchführen lassen.

Bei einer weiteren vorteilhaften Ausführungsform finden in der zweiten gemittelten Bilddarstellung Ähnlichkeiten der ersten Bilddarstellungen und der zweiten Bilddarstellung Einfluss. Vorliegend werden nicht nur die Anzahl der bisherigen Erfassungen einer Rasterzelle in den Bilddarstellungen betrachtet, sondern auch die Ähnlichkeiten der neuen Bilddarstellungen und der bisherigen Bilddarstellungen. Die oben genannte Formel verändert sich damit beispielsweise wie folgt:

$$B_{nij,ij} = [\, B_{(n-1)ij,ij} + (D_{nij,ij} * W_{Dn,ij})\,] : (1 + W_{Dn,ij})$$

$$W_{Dn,ij} = F : [(n-1)_{ij} * (D_{nij,ij} - B_{(n-1)ij,ij})]$$

mit $W_{Dn,ij}$ als Wichtung basierend auf der Anzahl bisheriger Bilddarstellungen und der Differenz zwischen den Bilddarstellungen; F kann ein beliebiger Faktor sein, wobei F > 0 ist und vorzugsweise F = 1.

Wird die Ähnlichkeit nicht nur über die Differenz zu den bisherigen Bilddarstellungen ermittelt, sondern erfolgt auf Basis einer Verteilung aller früheren Bilddarstellungen, so wird die Standardabweichung der Bilddarstellungen zu Hilfe genommen. Der Wichtungsfaktor ist dann beispielsweise wie folgt:

$$W_{Dn,ij} = F : [\sigma_{nij,ij} * (D_{nij,ij} - \mu_{nij,ij})]$$

mit $\sigma_{nij,ij}$ als Standardabweichung über alle Bilddarstellungen (bisherige und aktuelle) und $\mu_{nij,ij}$ als Mittelwert über alle Bilddarstellungen (bisherige (erste) und aktuelle (zweite)) für eine Rasterzelle; F kann ein beliebiger Faktor sein, wobei F > 0 ist und vorzugsweise F = 1.

Je weniger ähnlich sich die Bilddarstellungen der unterschiedlichen Zeitpunkte für eine Rasterzelle sind, desto geringer ist die Wichtung für die neuen Bilddarstellungen. Wird ein Bodenbereich also mehrfach immer wieder gleich erfasst, so wirkt sich dies stabilisierend auf die bebilderte Umgebungskarte aus. Kurzzeitige Störungen können mit Vorteil unterdrückt werden.

Bei einer weiteren vorteilhaften Ausführungsform bewegt sich das Gerät bei dem Erfassen der (n-1) Bilder, des n-ten Bildes und weiterer nachfolgender Bilder entlang von Begrenzungslinien des Bodenbereichs. Insbesondere fährt das Gerät nicht quer zu den Begrenzungslinien. Begrenzungslinien ergeben sich beispielsweise an Rändern von Teppichen oder zwischen Bodenflächen unterschiedlichen Belags, wie zum Beispiel an einem Übergang zwischen Parkett und Fliesen. Fährt das Gerät schräg beziehungsweise quer zu diesen Begrenzungslinien, kann der Übergang jeweils aus den unterschiedlichen Richtungen verschieden wahrgenommen werden, beispielsweise durch die physische Höhe eines Teppichs, sodass für das Gerät der Teppichrand vom Teppich aus flacher wirkt als vom benachbarten Bodenbelag, womit Verzerrungen in den Bilddarstellungen entstehen können. Fährt das Gerät dagegen entlang der Begrenzungslinien, kann diesen Verzerrungen entgegengewirkt werden.

Bei einer weiteren vorteilhaften Ausführungsform wird die Umgebungskarte mit Mitteln der Bildverarbeitung bearbeitet. Vorzugsweise untersucht das Gerät nach der Explorationsfahrt oder zusätzlich anschließend in bestimmten Zeitintervallen die erstellte bebilderte Umgebungskarte mit den Mitteln der Bildverarbeitung. Durch morphologische Operationen wie Region Growing, Erosion, Dilatation und/oder Closing können zusammenhängende Bereiche erschlossen werden, die vorzugsweise einem bestimmten Bodenbelag zuzuordnen sind. In einem weiteren oder alternativen Schritt können Kantenextraktionsalgorithmen wie beispielsweise Canny-Algorithmus oder Sobel-Operator, angewendet werden, um markante Begrenzungslinien in den Bilddarstellungen zu erarbeiten. In einem weiteren optionalen Bearbeitungsschritt kann eine Bestimmung geometrische Formen, wie Linien und Kreise, beispielsweise durch eine Hough-Transformation, erfolgen.

Das Erkennen der vorhandenen Begrenzungslinien kann weiter durch Zuhilfenahme zusätzlicher Sensoren verbessert werden. Beispielsweise kann ein im Gerät eingebauter Ultraschallsensor Rückschlüsse auf die Art des Bodenbelags geben. Ein Beschleunigungssensor beziehungsweise Gyroskop kann beim Überfahren einer Begrenzungslinie (z. B. einer Teppichkante) die Neigung des Geräts erkennen. Aufschluss über Änderungen des Untergrundes kann die Stromaufnahme der Fahrantriebe des Geräts, des Bürstenwalzenmotors, der Seitenbürstenmotoren oder eines anderen Aktuators mit Kontakt zum Boden geben. Auch eine beliebige Kombination der genannten Methoden kann Anwendung finden.

Das Gerät wertet anschließend die Bilddarstellungen danach aus, wo sich Begrenzungslinien befinden. Entlang dieser Begrenzungslinien unternimmt das Gerät bevorzugt eine gezielte Verbesserungsfahrt, um die bebilderte Umgebungskarte insbesondere in Bereichen sich angrenzender Bodenbeläge zu detaillieren und Verzerrungen zu minimieren. Bilddarstellungen im Bereich der Begrenzungslinien werden besonders bevorzugt mit erhöhter Wichtung mit den bisherigen Bilddarstellungen zusammengeführt, oder ersetzen diese, um eine verbesserte bebilderte Umgebungskarte zu erhalten.

Weiter betrifft die Erfindung ein mobiles, selbstfahrendes Gerät, insbesondere Bodenreinigungsgerät wie einen Saug- und/oder Kehr- und/oder Wischroboter, das eine Kamera und eine Verarbeitungseinrichtung umfasst, und das dazu eingerichtet ist, ein erfindungsgemäßes Verfahren zum Erstellen der Umgebungskarte des Umgebungsbereichs durchzuführen.

Es versteht sich, dass neben dem Verfahren und dem Gerät auch ein Computerprogrammprodukt, das Befehle umfasst, die bei der Ausführung des Programms durch das Gerät dieses veranlassen, das erfindungsgemäße Verfahren auszuführen, zum Umfang dieser Erfindung gehört. Ebenso gehört ein computerlesbares Medium, auf dem ein solches Computerprogrammprodukt gespeichert ist, zum Umfang dieser Erfindung. Jegliche Merkmale, Ausgestaltungen, Ausführungsformen und Vorteile das Verfahren betreffend finden auch in Zusammenhang mit dem erfindungsgemäßen Gerät, Computerprogrammprodukt und computerlesbarem Medium Anwendung, und umgekehrt.

Die Erfindung wird anhand der nachfolgenden, lediglich Beispiele darstellenden Ausführungen der Erfindung näher erläutert. Es zeigen:

Figur 1:     eine schematische Ansicht eines mobilen, selbstfahrenden Geräts, das dazu eingerichtet ist, ein erfindungsgemäßes Verfahren zum Erstellen einer Umgebungskarte eines Umgebungsbereichs durchzuführen,

Figur 2     ein Flussdiagramm eines Ausführungsbeispiels eines erfindungsgemäßen Verfahrens zur gewichteten Zusammenführung neuer (zweiter) und bisheriger (erster) Bilddarstellungen,

Figur 3     eine schematische Ansicht eines Ausführungsbeispiels einer Umgebungskarte, die mit einem erfindungsgemäßen Verfahren erstellt ist, und die dem Nutzer einen Reset erlaubt,

Figur 4     eine schematische Ansicht eines Ausführungsbeispiels von Umgebungskarten, die mit einem erfindungsgemäßen Verfahren erstellt sind, und die die Begrenzungslinien verarbeiten, und

Figur 5     ein Flussdiagramm eines Ausführungsbeispiels eines erfindungsgemäßen Verfahrens zur Verbesserung von Begrenzungslinien.

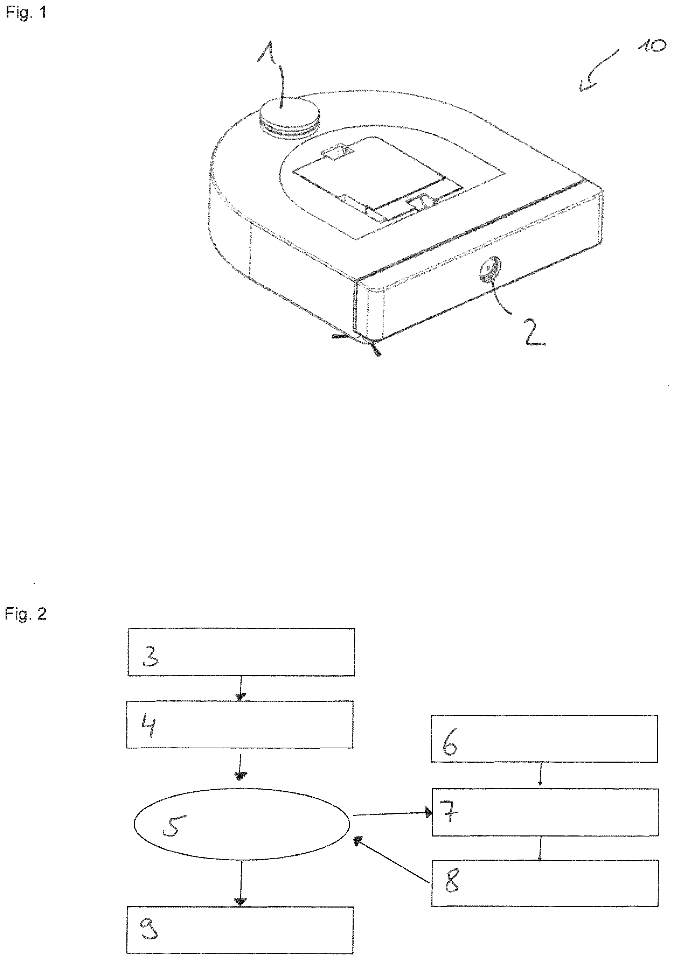

In Figur 1 ist ein mobiles, selbstfahrendes Gerät 10 dargestellt, das insbesondere ein Saugroboter ist. Der Saugroboter nimmt seine Umgebung mit verschiedenen Sensoren wahr, insbesondere mit einem LIDAR-Sensor 1, der zum Erstellen einer Umgebungskarte mit den Konturen von Wänden, Objekten und Hindernissen genutzt wird. Darüber hinaus verfügt der Saugroboter über eine Kamera 2, die Objekte vor dem Saugroboter erfassen kann und beispielsweise für eine Objekterkennung und Objektklassifizierung verwendet wird. Ein Sichtfeld der Kamera erfasst dabei auch Abschnitte des Bodenbelags. Diese Teile der Bilddarstellung werden genutzt, um eine photomosaische Bodenkartierung durchzuführen. Dabei werden die Bildinhalte mit bekannten Parametern der Kamera und ihrer Position und Ausrichtung am Saugroboter so transformiert, dass eine vogelperspektivische Darstellung des aufgenommenen Bodenbelags erzeugt wird. Unter Einbeziehung der Roboterposition und Roboterorientierung in Bezug auf die Umgebungskarte zum Zeitpunkt der Bildaufnahme kann die entsprechende Bodenfläche in der Umgebungskarte mit den Bilddarstellungen gefüllt werden.

Hierfür wird der Saugroboter nach seiner Inbetriebnahme auf eine Explorationsfahrt geschickt, bei der der Saugroboter die Umgebung erkundet, eine Umgebungskarte erstellt und zeitgleich die Bodenflächen als bebilderte Karte in die Umgebungskarte integriert. Während der Explorationsfahrt und bei sich anschließenden Reinigungsfahrten des Saugroboters erfasst die Kamera 2 Flächen des Bodens immer wieder neu aus wechselnden Richtungen mit unterschiedlichen Beleuchtungsbedingungen und teilweise mit unterschiedlichen Nickwinkeln. Um die Qualität der bebilderten Umgebungskarte bei deren Erstellung und bei deren weiterführenden ständigen Aktualisierungen zu erhöhen, werden erfindungsgemäß gewichtete Mittelwertbildungen bisheriger und neuer Bilddarstellungen der Bodenflächen erzeugt. Dadurch kann mit Vorteil eine stimmige zusammenhängende Bodendarstellung in der Umgebungskarte mit geringen Verzerrungen und geringen beleuchtungsabhängigen Helligkeitswechseln erzeugt werden.

Vorliegend werden also nicht Bilddarstellungen für einen aktuellen Bodenbereich vollständig mit neuen Bilddarstellungen überschrieben, sondern es erfolgt eine Zusammenführung bisheriger erster Bilddarstellungen mit neuen zweiten Bilddarstellungen desselben Bodenbereichs, wodurch sich stabile Bilddarstellungen ergeben. Der Bodenbereich ist hierbei in einzelne Rasterzellen eingeteilt. Die gewichtete Mittelwertbildung wird beispielsweise einzeln auf Farbkanäle oder Farbeinstellungen angewendet. Hierzu sind für jede Rasterzelle nicht nur die bisherigen ersten Bilddarstellungen, sondern auch die Anzahl aller bisherigen ersten Erfassungen einer jeden Rasterzelle im Saugroboter, insbesondere in seiner Verarbeitungseinrichtung, abgespeichert. Die erstellten gemittelten Bilddarstellungen werden in der Umgebungskarte abgelegt und bei aktualisierten gemittelten Bilddarstellungen mit diesen überschrieben. Die aktuellen gemittelten Bilddarstellungen ergeben sich aus den bisherigen (ersten) Bilddarstellungen der Rasterzelle multipliziert mit der Anzahl der bisherigen (ersten) Bilddarstellungen für diese Rasterzelle, addiert mit aktuellen (zweiten) Bilddarstellungen, dividiert durch die Anzahl der Bilderfassungen dieser Rasterzelle (Anzahl der ersten + zweiten Bilddarstellungen).

Durch diese gewichtete Mittelwertbildung aller Bilddarstellungen werden verzerrte oder verwackelte Bilder zeitnah unterdrückt oder haben von Anfang an kaum Auswirkungen. Das Verfahren resultiert in einer automatischen Mittelung von Beleuchtungsbedingungen und in einer Mittelung unterschiedlicher Perspektiven. Die Anzahl bisheriger erster Bilddarstellungen ist vorzugsweise auf einen Maximalwert begrenzt, sodass auch nach einer Vielzahl von Bilderfassungen neue Bilddarstellungen eine notwendige Gewichtung zur gemittelten Bilddarstellung beitragen. Veränderungen im Umgebungsbereich werden langsam in die Umgebungskarte übernommen.

Um die Umgebungskarte weiter zu stabilisieren, kann die Ähnlichkeit der neuen (zweiten) und der bisherigen (ersten) Bilddarstellungen mitberücksichtigt werden. Hierbei erfolgt eine Wichtung mit einem Wichtungsfaktor basierend auf der Anzahl bisheriger Bilddarstellungen und der Differenz zwischen den Bilddarstellungen. Alternativ kann die Ähnlichkeit auf Basis einer Verteilung aller bisherigen Bilddarstellungen unter Zuhilfenahme einer Standardabweichung der Bilddarstellungen erfolgen.

In Figur 2 ist ein Flussdiagramm zur gewichteten Mittelwertbildung dargestellt. In einem ersten Verfahrensschritt 3 führt der Saugroboter eine Explorationsfahrt aus und erfasst mit seiner Kamera (n-1) Bilder eines Bodenbereichs einer Rasterzelle des Umgebungsbereichs, wobei (n-1) die Anzahl der erfassten Bilder und n eine ganze Zahl größer 1 ist. Diese (n-1) Bilder werden mit der Verarbeitungseinrichtung des Saugroboters mit bekannten Parametern der Kamera und mit ihrer Position und Ausrichtung am Gerät derart transformiert, dass vogelperspektivische (n-1)- erste Bilddarstellungen des Bodenbereichs der Rasterzelle erzeugt werden. Diese (n-1)- ersten Bilddarstellungen werden zusammengefügt zu einer ersten gemittelten Bilddarstellung unter Durchführung einer gewichteten Mittelwertbildung.

Im Verfahrensschritt 4 erstellt der Saugroboter eine bebilderte Umgebungskarte basierend auf der ersten gemittelten Bilddarstellung des Bodenbereichs unter Einbeziehung der Geräteposition und -orientierung in Bezug auf die Umgebungskarte. Die Umgebungskarte sowie die ersten Bilddarstellungen, deren Anzahl und die erste gemittelte Bilddarstellung werden im Verfahrensschritt 5 in der Verarbeitungseinrichtung des Saugroboters abgespeichert.

Bei einem Reinigungsauftrag des Saugroboters (Schritt 6) sammelt der Saugroboter aktuelle weitere Bilder des Bodenbereichs derselben Rasterzelle. Insbesondere wird mindestens ein weiteres Bild (n-tes Bild), bevorzugt eine Mehrzahl von weiteren Bildern, aus unterschiedlichen Positionen aufgenommen. Diese aktuellen weiteren Bilder werden wiederum mit bekannten Parametern der Kamera, ihrer Position und Ausrichtung am Gerät derart transformiert, dass mindestens eine vogelperspektivische zweite Bilddarstellung des Bodenbereichs der Rasterzelle erzeugt wird.

Im Schritt 7 führt der Saugroboter die ersten und zweiten Bilddarstellungen der Rasterzelle unter Durchführung einer gewichteten Mittelwertbildung aller Bilddarstellungen zusammen, wodurch eine zweite gemittelte Bilddarstellung entsteht. Diese zweite gemittelte Bilddarstellung und aktualisierte Wichtungsfaktoren werden in der Verarbeitungseinrichtung des Saugroboters abgespeichert (Schritt 8). Zudem wird die in Schritt 5 gespeicherte erste gemittelte Bilddarstellung mit der zweiten gemittelten Bilddarstellung in der Umgebungskarte überschrieben. Die überarbeitete und aktualisierte Umgebungskarte wird dem Nutzer anschließend in einer App an seinem Smartphone angezeigt (Schritt 9).

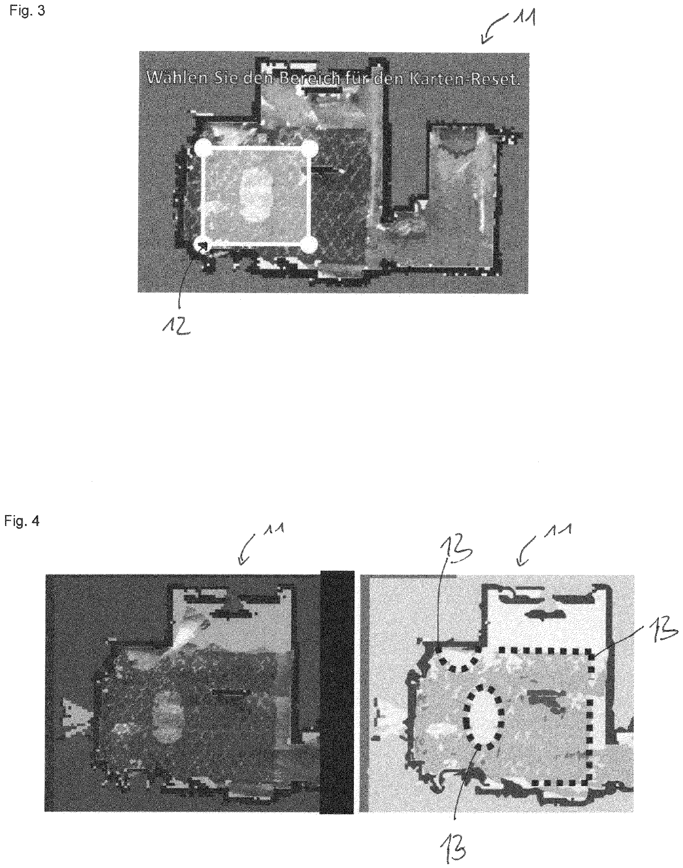

Vorzugsweise wird dem Nutzer eine Funktion zu einem Reset der bebilderten Umgebungskarte angeboten, bei dem nicht zwingend die vollständige Umgebungskarte gelöscht werden muss, sodass unveränderte Bereich weiterhin in der Karte belassen werden. Hierbei wird der Wichtungsfaktor n-1 auf 1 oder 0 gesetzt, sodass neue Bilddarstellungen stärkeren Einfluss haben beziehungsweise alte Bilddarstellungen einmalig überschrieben werden. Ein solcher Reset muss dabei nicht auf die gesamte Bodenfläche angewendet werden, sondern kann per Funktion in der App auf ausgewählte Bereiche der Karte beschränkt werden. In Figur 3 ist ein derartiger Reset-Bereich 12 in der Umgebungskarte 11 dargestellt, mit welchem dem Nutzer angeboten wird, bisherige Kartendarstellungen in einem vorgesehenen Bereich 12 bei der nächsten Reinigungsfahrt zu überschreiben.

Das Erstellen der bebilderten Umgebungskarte kann weiter verbessert werden, wenn sich der Saugroboter bei Erfassen der Bilder des Bodenbereichs nicht quer zu Begrenzungslinien zwischen Bodenflächen unterschiedlichen Belags bewegt, sondern entlang dieser. Um derartige Begrenzungslinien zu erkennen, wird die vorhandene bebilderte Umgebungskarte mit Mitteln der Bildverarbeitung bearbeitet. Durch morphologische Operationen wie Region Growing, Erosion, Dilatation oder Closing können zusammenhängende Bereiche eines gleichen Bodenbelags erschlossen werden. In einem weiteren oder alternativen Schritt können Kantenextraktionsalgorithmen (z. B. Canny-Algorithmus, Sobel-Operator) angewendet werden, um markante Begrenzungslinien im Bild zu erarbeiten. In einem weiteren, optionalen Schritt kann eine Bestimmung geometrischer Formen (Linien, Kreise) erfolgen (z. B. durch eine Hough-Transformation).

Die Erkennung der genannten Begrenzungslinien wird bevorzugt durch die Zuhilfenahme zusätzlicher Sensoren verbessert. Ein verbauter Ultraschallsensor gibt beispielsweise Rückschlüsse auf die Art des Untergrundes. Die Erkennung der Neigung des Roboters erfolgt durch einen verbauten Beschleunigungssensor bzw. ein Gyroskop beim Überfahren der Kante eines Teppichs. Ebenso kann hierfür die Stromaufnahme der Fahrantriebe, des Bürstenwalzenmotors, der Seitenbürstenmotoren oder eines anderen Aktuators mit Kontakt zum Boden Aufschluss über die Änderung des Untergrundes geben.

Der Saugroboter wertet die bisherigen Kartenbilddarstellungen danach aus, wo sich Begrenzungslinien 13 befinden, wie es beispielsweise in Figur 4 gezeigt ist. Die erkannten Begrenzungslinien 13 sind in Figur 4 (rechts) gestrichelt dargestellt. Entlang dieser Begrenzungslinien 13 unternimmt der Roboter nach dem Erkennen dieser Begrenzungslinien 13 eine gezielte Verbesserungsfahrt, um die bebilderte Umgebungskarte vor allem in den Bereichen sich angrenzender Bodenbeläge zu detaillieren und Verzerrungen zu minimieren.

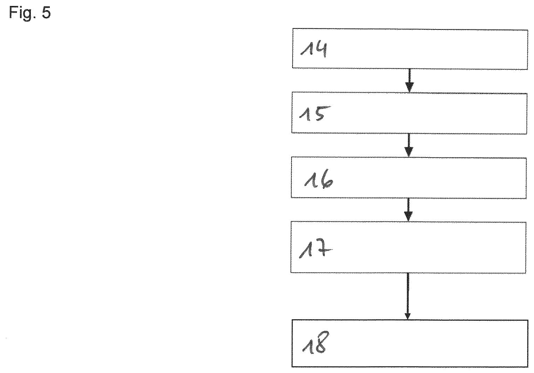

Ein Ablauf des Verfahrens zur Verbesserung von Begrenzungslinien 13 in der Umgebungskarte ist in Figur 5 dargestellt. In Schritt 14 führt der Saugroboter eine Explorationsfahrt aus. Anschließend erstellt der Saugroboter eine bebilderte Umgebungskarte aus den Bilddarstellungen der Kamera, wie es beispielsweise in Zusammenhang mit dem Ablaufverfahren des Ausführungsbeispiels der Figur 2 erläutert ist (Schritt 15). Mittels Bildverarbeitung werden die Bilddarstellungen untersucht und Begrenzungslinien extrahiert (Schritt 16). Nun fährt der Saugroboter entlang dieser extrahierten Begrenzungslinien und erfasst dort neue Bilder für neue Bilddarstellungen (Schritt 17). Im letzten Schritt 18 wird die Umgebungskarte mit den an den Begrenzungslinien neu aufgenommenen Bilddarstellungen verbessert.

**Patentansprüche**

1. Verfahren zum Erstellen einer Umgebungskarte (11) eines Umgebungsbereichs für den Betrieb eines mobilen, selbstfahrenden Geräts (10), insbesondere Bodenreinigungsgeräts wie ein Saug- und/oder Kehr- und/oder Wischroboter, mittels einer Kamera (2) des Geräts und einer Verarbeitungseinrichtung des Geräts, folgende Verfahrensschritte umfassend:

   a) Erfassen von (n-1) Bildern eines Bodenbereichs einer Rasterzelle des Umgebungsbereichs mit der Kamera (2);
   b) Transformieren der (n-1) Bilder mit bekannten Parametern der Kamera (2), ihrer Position und Ausrichtung am Gerät (10) derart, dass vogelperspektivische erste Bilddarstellungen des Bodenbereichs der Rasterzelle erzeugt werden;
   c) Zusammenfügen der ersten Bilddarstellungen unter Durchführung einer gewichteten Mittelwertbildung und Einfügen einer ersten gemittelten Bilddarstellung des Bodenbereichs in die Umgebungskarte (11) unter Einbeziehung der Geräteposition und -orientierung in Bezug auf die Umgebungskarte (11);
   d) Erfassen von mindestens einem n-ten Bild des Bodenbereichs der Rasterzelle und Transformieren des n-ten Bilds in eine zweite Bilddarstellung;
   e) Zusammenfügen der ersten und zweiten Bilddarstellungen der Rasterzelle unter Durchführung einer gewichteten Mittelwertbildung aller Bilddarstellungen; und
   f) Überschreiben der ersten gemittelten Bilddarstellung in der Umgebungskarte (11) mit einer zweiten gemittelten Bilddarstellung.

2. Verfahren nach Anspruch 1, wobei der Umgebungsbereich in eine Vielzahl von Rasterzellen eingeteilt ist, und in jeder Rasterzelle die Verfahrensschritte a) bis f) durchgeführt werden.

3. Verfahren nach einem der vorhergehenden Ansprüche, wobei das Erfassen der (n-1) Bilder bei einer Explorationsfahrt und/oder Reinigungsfahrt und das Erfassen des n-ten Bildes bei einer sich anschließenden Reinigungsfahrt durchgeführt werden.

4. Verfahren nach einem der vorhergehenden Ansprüche, wobei das Erfassen der ( n-1) Bilder aus wechselnden Richtungen, mit unterschiedlichen Beleuchtungsbedingungen und/oder mit unterschiedlichen Nickwinkeln erfolgt.

5. Verfahren nach einem der vorhergehenden Ansprüche, wobei sich die zweite gemittelte Bilddarstellung ergibt aus den ersten Bilddarstellungen multipliziert mit der Anzahl der erfassten ersten Bilddarstellungen, das Ergebnis addiert mit der zweiten Bilddarstellung und dieses Ergebnis geteilt wird durch n.

6. Verfahren nach einem der vorhergehenden Ansprüche, wobei die ersten und zweiten Bilddarstellungen die Farbkanäle und/oder Farbeinstellungen umfassen, auf die die gewichtete Mittelwertbildung angewandt wird.

7. Verfahren nach Anspruch 5, wobei das Erfassen der (n-1) Bilder auf einen Maximalwert beschränkt ist.

8. Verfahren nach Anspruch 5, wobei ein Reset durchführbar ist, bei dem eine Wichtung für die erste gemittelte Bilddarstellung während der Berechnung der zweiten gemittelten Bilddarstellung auf 1 oder 0 gesetzt wird.

9. Verfahren nach einem der vorhergehenden Ansprüche, wobei in der zweiten gemittelten Bilddarstellung Ähnlichkeiten der ersten Bilddarstellungen und der zweiten Bilddarstellung Einfluss finden.

10. Verfahren nach einem der vorhergehenden Ansprüche, wobei sich das Gerät bei dem Erfassen der (n-1) Bilder und des n-ten Bildes entlang von Begrenzungslinien (13) des Bodenbereichs bewegt.

11. Verfahren nach einem der vorhergehenden Ansprüche, wobei die Umgebungskarte (11) mit Mitteln der Bildverarbeitung bearbeitet wird, um Begrenzungslinien des Bodenbereichs zu ermitteln.

12. Mobiles, selbstfahrendes Gerät (10), insbesondere Bodenreinigungsgerät wie ein Saug- und/oder Kehr- und/oder Wischroboter, das mindestens eine Kamera (2) und eine Verarbeitungseinrichtung umfasst, und das dazu eingerichtet ist, eine Umgebungskarte (11) eines Umgebungsbereichs gemäß einem der vorhergehenden Ansprüche zu erstellen.

13. Computerprogrammprodukt, umfassend Befehle, die bei der Ausführung des Programms durch das Gerät (10) dieses veranlassen, das Verfahren gemäß einem der vorhergehenden Ansprüche 1 bis 11 auszuführen.

14. Computerlesbarer Datenträger, auf dem das Computerprogrammprodukt nach Anspruch 13 gespeichert ist.

Fig. 1

Fig. 2

Fig. 3

Fig. 4

Fig. 5

Europäisches Patentamt
European Patent Office
Office européen des brevets

**EUROPÄISCHER RECHERCHENBERICHT**

Nummer der Anmeldung

EP 25 15 5043

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y,D<br>A | DE 10 2018 132428 A1 (NEATO ROBOTICS INC [US]) 19. Juni 2019 (2019-06-19)<br>* Absatz [0001] *<br>* Absatz [0004] *<br>* Absatz [0007] *<br>* Absatz [0014] *<br>* Absatz [0055] *<br>* Absatz [0061] - Absatz [0066] *<br>* Abbildung 1 *<br>----- | 1-9,<br>12-14<br>10,11 | INV.<br>G06T3/4038 |
| A | CN 113 050 617 A (ECOVACS ROBOTICS CO LTD) 29. Juni 2021 (2021-06-29)<br>* Abschnitte "Background technique", "Summary of the invention" *<br>----- | 1-14 | |
| Y | EP 3 974 778 B1 (HUAWEI TECH CO LTD [CN]) 25. Oktober 2023 (2023-10-25)<br>* Absatz [0009] - Absatz [0020] *<br>* Absatz [0030] *<br>* Absatz [0040] *<br>* Absatz [0069] *<br>* Absatz [0179] *<br>* Absatz [0181] *<br>* Absatz [0190] *<br>* Absatz [0196] *<br>* Absatz [0226] *<br>* Absatz [0239] *<br>* Formeln (5), (6) *<br>----- | 1-9,<br>12-14 | RECHERCHIERTE SACHGEBIETE (IPC)<br><br>G06T<br>A47L |
| A | US 2019/196469 A1 (EBRAHIMI AFROUZI ALI [US] ET AL) 27. Juni 2019 (2019-06-27)<br>* Absatz [0003] *<br>* Absatz [0030] *<br>----- | 1-14 | |

Der vorliegende Recherchenbericht wurde für alle Patentansprüche erstellt

| Recherchenort | Abschlußdatum der Recherche | Prüfer |
|---|---|---|
| München | 23. Juni 2025 | Engels, Angela |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

 ............................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 25 15 5043

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

23-06-2025

| Im Recherchenbericht angeführtes Patentdokument | Datum der Veröffentlichung | Mitglied(er) der Patentfamilie | Datum der Veröffentlichung |
|---|---|---|---|
| DE 102018132428 A1 | 19-06-2019 | CN 110060207 A | 26-07-2019 |
| | | DE 102018132428 A1 | 19-06-2019 |
| | | GB 2570785 A | 07-08-2019 |
| | | US 2019183310 A1 | 20-06-2019 |
| CN 113050617 A | 29-06-2021 | KEINE | |
| EP 3974778 B1 | 25-10-2023 | CN 112179361 A | 05-01-2021 |
| | | EP 3974778 A1 | 30-03-2022 |
| | | US 2022117456 A1 | 21-04-2022 |
| | | WO 2021000630 A1 | 07-01-2021 |
| US 2019196469 A1 | 27-06-2019 | US 11989021 B1 | 21-05-2024 |
| | | US 2019196469 A1 | 27-06-2019 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102018132428 A1